# EUROPÄISCHE PATENTSCHRIFT

(11) **EP 2 407 685 B1**
(45) Veröffentlichungstag und Bekanntmachung des Hinweises auf die Patenterteilung: **17.04.2019**
(21) Anmeldenummer: 11005814.6
(22) Anmeldetag: 15.07.2011
(51) Int. Cl.: F16F 7/12

(54) **Vorrichtung zum Energieabbau in einem Crashlastfall und Tragstruktur für ein Fahrzeug**
Device for dissipating energy in a crash load case and support structure for a vehicle
Dispositif de recyclage d'énergie dans une chute de charge lors d'un crash et structure porteuse destinée à un véhicule

(30) Priorität: 16.07.2010 DE 102010027355
(43) Veröffentlichungstag der Anmeldung: 18.01.2012
(73) Patentinhaber: Audi AG, 85045 Ingolstadt (DE); Universität Stuttgart, 70174 Stuttgart (DE)
(72) Erfinder: Döll, Jochen, 74080 Heilbronn (DE); Feindler, Nico, 70499 Stuttgart (DE); Drechsler, Klaus, 83620 Feldkirchen (DE)
(74) Vertreter: Patzelt, Heike Anna Maria

(56) Entgegenhaltungen:
- EP-A1- 2 295 305
- DE-A1- 4 312 343
- DE-A1- 10 154 094
- DE-A1- 19 718 050
- DE-A1-102006 058 604
- DE-C1- 4 425 829
- DE-T2- 60 300 496
- JP-A- H08 170 675
- US-A1- 2008 023 582

## Beschreibung

Die Erfindung betrifft eine Vorrichtung zur Energieabsorption in einem Crashlastfall gemäß dem Oberbegriff des Patentanspruchs 1 und eine zugehörige Tragstruktur für ein Fahrzeug.

Aus dem Stand der Technik sind verschiedenen Systeme und Verfahren zur Umwandlung von Bewegungsenergie in Deformationsenergie bekannt, welche bei einem Crash bzw. einer Kollision von Fahrzeugen erfolgt. Aufgrund ihrer hohen spezifischen Kennwerte gewinnen Strukturen aus Faserkunststoffverbunde (FKV) als Energieabsorber in Crashlastfällen zunehmend an Bedeutung.

Eine Initiierung des energieabsorbierenden Versagensverhaltens des Faserverbundbauteils wird mittels einer definierten Schwächung (Triggerung), beispielsweise durch eine Reduktion der Wandstärke an einem Bauteilende erreicht. Hierbei wird unter Druckbelastung eine Spannungsüberhöhung hervorgerufen, welche schließlich zu einem gezielten und definierten Versagensverhalten des Faserverbundbauteils führt. Die sich ausbildende Bruchfront zeichnet sich durch Delaminationen und Faserbrüche aus und ist maßgeblich für das hohe Energieabsorptionsniveau verantwortlich.

Die höchsten spezifischen Kennwerte werden bei einseitig eingespannten Proben, die auf eine ebene Fläche treffen erzielt. Beginnend vom freien Ende, welches mit der Triggerung versehen ist, zieht sich die Bruchfront progressiv durch das Bauteil. Eine Forderung nach einem freien Bauteilende steht allerdings im Gegensatz zu einer guten strukturellen Einbindung mit zwei kraftübertragenden und angeflanschten Enden. Gängige Maßnahmen zur Initiierung des energieabsorbierenden Versagensverhaltens bei gleichzeitiger Integration sind beispielsweise eine Bauteilverjüngung oder das gezielte Auslassen von Fasern während der Fertigung des Faserverbundbauteils. Eine weitere Möglichkeit ist das Umstülpen eines FKV-Rohres mit einem entsprechenden vorgeschalteten Bauteil. Die genannten Maßnahmen führen zwar zu einem energieabsorbierenden Versagensmodus, weisen jedoch relativ niedrige Kennwerte auf, welche nicht das volle Leichtbaupotenzial des Werkstoffes ausnutzen.

Ein gutes Energieabsorptionsverhalten mit hohen Kennwerten kann bei Bauteilen mit einem Fasentrigger erzielt werden. Die sich ausbildende Bruchfront weist wichtige Charakteristika auf, die zu hohen spezifischen Kennwerten führen. In einer solchen Bruchfront, ist ein Bruchkeil zu erkennen, welcher aus zerstäubtem Material besteht und sich annähernd in der Mitte der Bauteilwand befindet. An diesem Keil wird das Material gezielt "gespalten", so dass sich eine Vielzahl von Faserbrüchen einstellt, die maßgeblich zur Energieabsorption beitragen. Hierbei hat die Triggerungsart einen wesentlichen Einfluss auf die Bruchkeilgeometrie. Die Größe und Lage des Bruchkeils hat wiederum einen erheblichen Einfluss auf das Energieabsorptionsniveau und somit auf das Leichtbaupotenzial.

In der DE 603 00 496 T2 wird ein energieabsorbierendes System beschrieben, welches verwendet wird, um ein erstes Stoßelement an einem zweiten Stoßelement zu befestigen und Stoßenergie zu absorbieren, wenn eines der Stoßelemente zusammengedrückt wird. Das beschriebene energieabsorbierende System umfasst ein Verbundrohr, das ein wirksamer Stoßenergieabsorber ist und nach einem Stoß eine gute Festigkeit bewahrt, um eine sichere Verbindung zwischen einem Stoßfänger und einem Fahrzeug beizubehalten. Das Verbundrohr bildet zwischen dem ersten und zweiten Stoßelement eine energieabsorbierende Halterung und umfasst einen Befestigungsabschnitt, welcher einstückig mit einem rohrförmigen Hauptkörperabschnitt ausgebildet ist. Der Befestigungsabschnitt hat ein Ende zum Befestigen des ersten Stoßelements, wobei das Ende in eine Hülse oder in eine Buchse eingesetzt werden kann, welche sich im ersten Stoßelement befindet. Der Hauptkörperabschnitt und der Befestigungsabschnitt sind aus einer oder mehreren Faserschichten hergestellt, welche in eine Kunstharzmatrix eingebettet sind, wobei der Hauptkörperabschnitt einen größeren Umfang als der Befestigungsabschnitt aufweist, um einen Absatz auszubilden, an welchem ein Delaminationskeil anstößt. Während eines Stoßes wird der Delaminationskeil gegen den Absatz gedrückt, wobei die daraus resultierende Delamination des rohrförmigen Hauptkörpers die entstehende Stoßenergie absorbiert. Während des Stoßes wird der Befestigungsabschnitt des Verbundrohres nicht zusammengedrückt und bleibt intakt. Die Hülse oder Buchse im Stoßelement gleitet lediglich über den Befestigungsabschnitt, wenn der Delaminationskeil in den Absatz hineingedrückt wird.

Aus der JP H08 170675 A und der US 2008/0023582 A1 ist jeweils eine Vorrichtung zur Energieabsorption mit mindestens einen Triggerelement und einer Faserverbundbauteil bekannt. Das mindestens eine Triggerelement beeinflusst definiert ein Versagensverhalten des Faserverbundbauteils im Crashlastfall. Zudem besteht ein direkter Kontakt zwischen dem mindestens einen Triggerelement und dem Faserverbundbauteil.

Aus der DE 43 12 343 A1 ist eine gattungsgemäße Vorrichtung zur Energieabsorption in Faserverbundbauweise bekannt, welche einen im Lastübertragungspfad angeordneten Grundkörper, ein Lasteinleitungselement und einen zwischen Lasteinleitungselement und Grundkörper wirkenden, bei Überlast energieverzehrend verformten Faserverbundsteg umfasst. Hierbei sind das Lasteinleitungselement in einer in Lastrichtung langlochförmigen Aussparung im Grundkörper und der Faserverbundsteg in der Aussparung lastübertragend angeordnet. Zudem weist der Faserverbundsteg zumindest an den in Lastrichtung verlaufenden Stegrändern eine sich durchgehend in die angrenzenden Randbereiche des Grundkörpers erstreckende, im Überlastfall fortschreitend aufreißende Faserbindung auf. Der Faserverbundsteg, der eine gegenüber dem Grundkörper verringerte Wandstärke besitzt, ist gemeinsam mit diesem als einstückige Faserverbundstruktur aus Glas- und/oder Carbonfaserlagen hergestellt. Von den mittleren, sich über den Steg fortsetzenden Faserlagen besitzt die Mehrzahl eine sich bezüglich der Steglängsrichtung unter ±45° kreuzende Faserorientierung und zwischen diese sind einige Faserlagen mit einer in Steglängsrichtung undirektionalen Faserrichtung eingelagert, während die äußeren, an der Aussparung endenden Faserlagen zum größten Teil eine in Steglängsrichtung unidirektionale Faserrichtung aufweisen und nur vergleichsweise wenige ±45°- Lagen enthalten.

Der Erfindung liegt die Aufgabe zu Grunde, eine Vorrichtung zur Energieabsorption in einem Crashlastfall derart auszugestalten, dass ein gutes Energieabsorbtionsverhalten mit hohen Kennwerten erzielt werden kann und gleichzeitig eine Anbindung an die Tragstruktur der Fahrzeugkarosserie möglich ist.

Erfindungsgemäß wird die Aufgabe durch Bereitstellung einer Vorrichtung zur Energieabsorption in einem Crashlastfall mit den Merkmalen des Patentanspruchs 1 und durch eine Tragstruktur für ein Fahrzeug mit den Merkmalen des Patentanspruchs 9 gelöst. Vorteilhafte Ausführungsformen und Weiterbildungen der Erfindung sind in den abhängigen Patentansprüchen angegeben.

Ausführungsformen der vorliegenden Erfindung lösen in vorteilhafter Weise den Zielkonflikt, welcher sich aus den beiden kontroversen Randbedingungen für eine optimale Energieabsorption einerseits und einer bestmöglichen Bauteilintegration andererseits ergibt. Der Kern der Erfindung liegt in der Integration eines Triggerelements, welches neben der Sicherstellung einer hohen Energieabsorption im Crashlastfall die Möglichkeit schafft, dass Bauteil tragend mittels gängiger Verbindungstechnologien, wie beispielsweise Schrauben, Nieten usw., in ein Tragwerk des Fahrzeugs zu integrieren.

Um eine Vorrichtung zur Energieabsorption in einem Crashlastfall derart auszugestalten, dass ein gutes Energieabsorbtionsverhalten mit hohen Kennwerten erzielt werden kann und gleichzeitig eine Anbindung an die Tragstruktur der Fahrzeugkarosserie möglich ist, weist das Faserverbundbauteil einen geflochtenen Faserverbund auf, in welchen das mindestens eine Triggerelement so eingeflochten ist, dass ein direkter Kontakt zwischen dem mindestens einen Triggerelement und dem Faserverbund besteht. In vorteilhafter Weise ergibt sich hierdurch ein funktionsintegratives Trigger- und/oder Verbindungselement zur Einbindung von energieabsorbierenden Faserverbundstrukturen in eine Tragstruktur des Fahrzeugs. Durch die Integration des mindestens einen Triggerelements im Faserverbundbauteil kann dieses das Versagensverhalten des Faserverbundbauteils im Crashlastfall definiert beeinflussen, so dass in vorteilhafter Weise ein möglichst ideales Energieabsorptionsverhalten mit hohen Kennwerten erzielt werden kann. Zudem kann die gesamte Länge des Faserverbundbauteils zur Energieabsorption verwendet werden, wenn die Triggerelemente jeweils an den offenen Enden des Faserverbundbauteils in den Faserverbund integriert sind.

In vorteilhafter Ausgestaltung der erfindungsgemäßen Vorrichtung zur Energieabsorption in einem Crashlastfall ist vorgesehen, dass das mindestens eine Triggerelement mit mindestens einem Verbindungselement verbunden ist, über welches das Faserverbundbauteil in eine tragende Struktur des Faserzeugs integriert werden kann. Somit können diese energieabsorbierenden Vorrichtungen funktionell eingebunden werden und müssen nicht als "tote" Masse mitgetragen werden.

Vorzugsweise ist das mindestens eine Verbindungselement mit dem geflochtenen Faserverbund des Faserverbundbauteils verbunden. Somit stellt das zusätzliche in den Faserverbund integrierte Bauteil das Triggerelement und das Verbindungselement als auftreffende Fläche zur Verfügung. Ein Deformationskeil bildet sich somit nicht mehr aus pulverisiertem Material aus, sondern wird durch eine entsprechende Keilplatte ersetzt, die beispielsweise aus Metall besteht. Eine Triggerung mittels einer eingangs beschriebenen Fase ist nicht mehr erforderlich. Das Verbindungselement mit dem Triggerelement kann bereits während der Fertigung mit in das Faserverbundbauteil integriert werden und vereint somit die Funktion als Triggerelement und die Kraftübertragung bzw. die Funktion als Befestigungsflansch. Dadurch kann in vorteilhafter Weise ein möglichst ideales Energieabsorptionsverhalten mit hohen Kennwerten erzielt werden, wobei zusätzlich die Integration in eine tragende Struktur gewährleistet werden kann.

In weiterer vorteilhafter Ausgestaltung der erfindungsgemäßen Vorrichtung zur Energieabsorption in einem Crashlastfall ist das mindestens eine Triggerelement so in den Faserverbund integriert, dass es den Faserverbund in einen äußeren Bereich und einen inneren Bereich teilt. Hierbei ist das mindestens eine Triggerelement beispielsweise als Ringbund mit keilförmigem Querschnitt ausgeführt. Alternativ kann das Triggerelement auch eine andere geschlossene Formen aufweisen.

In weiterer vorteilhafter Ausgestaltung der erfindungsgemäßen Vorrichtung zur Energieabsorption in einem Crashlastfall ist vorgesehen, dass das Verbindungselement als Befestigungsplatte ausgeführt ist, an welche das mindestens eine Triggerelement so angeformt ist, dass das mindestens eine Triggerelement das als Befestigungsplatte ausgeführte Verbindungselement in zwei Bereiche teilt. Bevorzugt ist das Verbindungselement als ringförmige Befestigungsplatte ausgeführt. In vorteilhafter Weise ist das mindestens eine Triggerelement so in den Faserverbund integriert, dass sich der innere Bereich des Faserverbunds auf einem Überstand innerhalb des mindestens einen Triggerelements abstützt, und der äußere Bereich sich außerhalb des mindestens einen Triggerelements auf einer Restplatte abstützt. Durch die Abstützung des inneren bzw. äußeren Bereichs des Faserverbunds auf der Befestigungsplatte kann in vorteilhafter Weise eine höhere Energieabsorption erzielt werden. Hierzu ist das Verbindungselement vorzugsweise senkrecht zum Faserverbund ausgerichtet, wobei der äußere Bereich des Faserverbunds unter Ausbildung eines korrespondierenden Radius entlang der Oberfläche der Restplatte verläuft.

In weiterer vorteilhafter Ausgestaltung der erfindungsgemäßen Vorrichtung zur Energieabsorption in einem Crashlastfall ist vorgesehen, dass das Faserverbundbauteil eine geschlossene Grundform aufweist, welche an beiden Enden jeweils von einem Verbindungselement mit integriertem Triggerelement abgeschlossen ist. Bevorzugt weist das Faserverbundbauteil eine rohrförmige Grundform auf. Dies ermöglicht eine beidseitige Einbindung der Vorrichtung zur Energieabsorption in die Fahrzeugtragstruktur.

In vorteilhafter Ausgestaltung der erfindungsgemäßen Tragstruktur ist vorgesehen, dass die Vorrichtung zur Energieabsorption, in einem Crashlastfall als tragendes Strukturbauteil durch Verbindungstechnologien, vorzugsweise durch Nieten und/oder Schrauben, mit anderen Strukturbauteilen der Tragstruktur des Fahrzeugs verbunden ist.

Ausführungsformen der vorliegenden Erfindung ermöglichen aufgrund der integrierbaren Verbindungselemente mit Triggerelementen insbesondere bei Multimaterialkonzepten eine werkstoffunabhängige Fügung.

Des Weiteren kann mit Hilfe der vorliegenden Erfindung ein annähernd ideales Energieabsorptionsverhalten erzeugt werden, welches hohe spezifische Kennwerte aufweist. Über die Form des zusätzlichen mindestens einen Triggerelements lassen sich zudem das Energieabsorptionsniveau sowie die maximale Kraft regulieren.

### Ausführungsformen der vorliegenden Erfindung

Eine vorteilhafte Ausführungsform der Erfindung ist in der Zeichnung dargestellt und wird nachfolgend beschrieben.

Dabei zeigt:

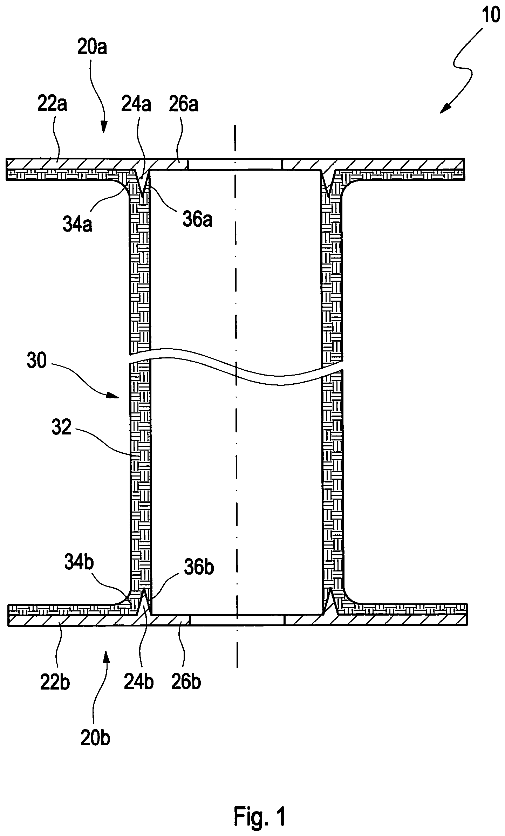

- Fig. 1: einen Querschnitt durch ein Ausführungsbeispiel, einer erfindungsgemäßen Vorrichtung zur Energieabsorption in einem Crashlastfall für ein Fahrzeug.

Wie aus Fig. 1 ersichtlich ist, umfasst das dargestellte Ausführungsbeispiel einer Vorrichtung zur Energieabsorption 10 in einem Crashlastfall ein Faserverbundbauteil 30 und mindestens ein Triggerelement 24a, 24b, welches das Versagensverhalten des Faserverbundbaüteils 30 im Crashlastfall definiert beeinflusst.

Erfindungsgemäß weist das Faserverbundbauteil 30 einen geflochtenen Faserverbund 32 auf, in welchen das mindestens eine Triggerelement 24a, 24b so eingeflochten ist, dass ein direkter Kontakt zwischen dem mindestens einen Triggerelement 24a, 24b und dem Faserverbund 32 besteht.

Wie aus Fig. 1 weiter ersichtlich ist, ist das mindestens eine Triggerelement 24a, 24b mit mindestens einem Verbindungselement 20a, 20b verbunden, über welches das Faserverbundbauteil 30 in eine tragende Struktur eines Fahrzeugs integriert werden kann. Im dargestellten Ausführungsbeispiel weist das Faserverbundbauteil 30 eine rohrförmige Grundform auf, welche an beiden Enden jeweils von einem Verbindungselement 20a, 20b mit integriertem Triggerelement 24a, 24b abgeschlossen ist. Hierbei sind die Verbindungselemente 20a, 20b durch Anflechten und Matrixhaftung mit dem Faserverbundbauteil 30 verbunden.

Wie aus Fig. 1 weiter ersichtlich ist, sind die Triggerelemente 24a, 24b jeweils als Ringbund mit keilförmigen Querschnitt ausgeführt, und die Verbindungselemente 20a, 20b sind als ringförmige Befestigungsplatten ausgeführt. An jedem als Befestigungsplatte ausgeführten Verbindungselement 20a, 20b ist ein als Ringbund mit keilförmigen Querschnitt ausgeführtes Triggerelement 24a, 24b so angeformt, dass das Triggerelement 24a, 24b das als Befestigungsplatte ausgeführte Verbindungselement 20a, 20b in zwei Bereiche 22a, 22b, 26a, 26b teilt. Des Weiteren sind die Triggerelemente 24a, 24b so in den Faserverbund 32 integriert, dass es den Faserverbund 32 in einen äußeren Bereich 34a, 34b und einen inneren Bereich 36a, 36b teilt und im Crashlastfall als Delaminationskeil eine weitere progressive Ausbreitung einer Bruchfront durch den Faserverbund 32 bewirkt. Hierbei stützt sich der innere Bereich 36a, 36b des Faserverbunds 32 jeweils auf einem Überstand 26a, 26b innerhalb des korrespondierenden als Ringbund ausgeführten Triggerelements 24a, 24b ab, und der äußere Bereich 34a, 34b stützt sich außerhalb des korrespondierenden als Ringbund ausgeführten Triggerelements 24a, 24b auf einer Restplatte 22a, 22b ab. Hierzu ist das Verbindungselement 20a, 20b im Wesentlichen senkrecht zum Faserverbund 32 ausgerichtet, wobei der äußere Bereich 34a des Faserverbunds 32 unter Ausbildung eines korrespondierenden Radius entlang der Oberfläche der Restplatte 22a, 22b verläuft.

Die Vorrichtung zur Energieabsorption in einem Crashlastfall kann über die Verbindungselemente 20a, 20b als tragendes Strukturbauteil durch geeignete Verbindungstechnologien, vorzugsweise durch Nieten und/oder Schrauben, mit anderen Strukturbauteilen der Tragstruktur des Fahrzeugs verbunden werden.

Ausführungsformen der vorliegenden Erfindung stellen in vorteilhafter Weise ein funktionsintegratives Trigger- und/oder Verbindungselement zur Einbindung von energieabsorbierenden Faserverbundstrukturen in eine Tragstruktur eines Fahrzeugs zur Verfügung, welches eine optimale Energieabsorption einerseits und eine bestmögliche Bauteilintegration andererseits ermöglicht. Durch die Integration des Triggerelements in den Faserverbund kann das Energieabsorptionsniveau erhöht werden, und durch die Integration der Vorrichtung zur Energieabsorption in die Fahrzeugtragstruktur kann das Leichtbaupotenzial optimal ausgeschöpft werden. Der Kern der Erfindung liegt in der Integration des Verbindungselements mit dem Triggerelement in das Faserverbundelement, welches neben der Sicherstellung einer hohen Energieabsorption im Crashlastfall die Möglichkeit schafft das Bauteil tragend mittels gängiger Verbindungstechnologien (Schrauben, Nieten) in ein Tragwerk zu integrieren. Somit können diese Bauteile funktionell eingebunden werden und müssen nicht als "tote" Masse mitgetragen werden. Mit Hilfe von Ausführungsformen der vorliegenden Erfindung kann ein annähernd ideales Energieabsorptionsverhalten erzeugt werden, welches hohe spezifische Kennwerte aufweist. Über die Form des zusätzlichen Triggerelements lassen sich in vorteilhafter Weise das Energieabsorptionsniveau sowie die maximale Kraft regulieren.

### BEZUGSZEICHENLISTE

- 10: Vorrichtung zur Energieabsorption in einem Crashlastfall
- 20a, 20b: Verbindungselement
- 22a, 22b: Restplatte
- 24a, 24b: Triggerelement
- 26a, 26b: Überstand
- 30: Faserverbundbauteil
- 32: Faserverbund
- 34a, 34b: äußerer Bereich
- 36a, 36b: innerer Bereich

## Patentansprüche

1. Vorrichtung zur Energieabsorption in einem Crashlastfall mit mindestens einem Triggerelement (24a, 24b) und einem Faserverbundbauteil (30), wobei das mindestens eine Triggerelement (24a, 24b) ein Versagensverhalten des Faserverbundbauteils (30) im Crashlastfall definiert beeinflusst, und wobei ein direkter Kontakt zwischen dem mindestens einen Triggerelement (24a, 24b) und dem Faserverbund (32) besteht, **dadurch gekennzeichnet, dass** das Faserverbundbauteil (30) einen geflochtenen Faserverbund (32) aufweist, in welchen das mindestens eine Triggerelement (24a, 24b) eingeflochten ist.

2. Vorrichtung nach Anspruch 1, **dadurch gekennzeichnet, dass** das mindestens eine Triggerelement (24a, 24b) mit mindestens einem Verbindungselement (20a, 20b) verbunden ist, über welches das Faserverbundbauteil (30) in eine tragende Struktur eines Faserzeugs integrierbar ist.

3. Vorrichtung nach Anspruch 2, **dadurch gekennzeichnet, dass** das mindestens eine Verbindungselement (20a, 20b) mit dem geflochtenen Faserverbund (32) des Faserverbundbauteils (30) verbunden ist.

4. Vorrichtung nach einem der Ansprüche 1 bis 3, **dadurch gekennzeichnet, dass** das mindestens eine Triggerelement (24a, 24b) so in den Faserverbund (32) integriert ist, dass der Faserverbund (32) in einen äußeren Bereich (34a, 34b) und einen inneren Bereich (36a, 36b) geteilt ist.

5. Vorrichtung nach einem der Ansprüche 1 bis 4, **dadurch gekennzeichnet, dass** das mindestens eine Triggerelement (24a, 24b) als geschlossene Form ausgeführt ist, welcher einen keilförmigen Querschnitt aufweist.

6. Vorrichtung nach einem der Ansprüche 2 bis 5, **dadurch gekennzeichnet, dass** das Verbindungselement (20a, 20b) als Befestigungsplatte ausgeführt ist, an welche das mindestens eine Triggerelement (24a, 24b) so angeformt ist, dass das mindestens eine Triggerelement (24a, 24b) das als Befestigungsplatte ausgeführte Verbindungselement (20a, 20b) in zwei Bereiche (22a, 22b, 26a, 26b) einteilt.

7. Vorrichtung nach Anspruch 6, **dadurch gekennzeichnet, dass** das mindestens eine Triggerelement (24a, 24b) so in den Faserverbund (32) integriert ist, dass sich der innere Bereich (36a, 36b) des Faserverbunds (32) auf einem Überstand (26a, 26b) innerhalb des mindestens einen Triggerelements (24a, 24b) abstützt, und der äußere Bereich (34a, 34b) sich außerhalb des mindestens einen Triggerelements (24a, 24b) auf einer Restplatte (22a, 22b) abstützt.

8. Vorrichtung nach einem der Ansprüche 1 bis 7, **dadurch gekennzeichnet, dass** das Faserverbundbauteil (30) eine geschlossene Grundform aufweist, welche an beiden Enden jeweils von einem Verbindungselement (20a, 20b) mit integriertem Triggerelement (24a, 24b) abgeschlossen ist.

9. Tragstruktur für ein Fahrzeug, **gekennzeichnet durch** mindestens eine Vorrichtung zur Energieabsorption in einem Crashlastfall nach einem der Ansprüche 1 bis 8.

10. Tragstruktur nach Anspruch 9, **dadurch gekennzeichnet, dass** die Vorrichtung zur Energieabsorption in einem Crashlastfall als tragendes Strukturbauteil durch Verbindungstechnologien, vorzugsweise durch Nieten und/oder Schrauben, mit anderen Strukturbauteilen der Tragstruktur des Fahrzeugs verbunden ist.

## Claims

1. Device for energy absorption in the event of a crash load having at least one trigger element (24a, 24b) and a fibre composite component (30), wherein the at least one trigger element (24a, 24b) influences a failure behaviour of the fibre composite component (30) in a defined manner in the event of a crash load, and wherein there is direct contact between the at least one trigger element (24a, 24b) and the fibre composite component (32), **characterised in that** the fibre composite component (30) has a braided fibre composite (32) in which the at least one trigger element (24a, 24b) is braided.

2. Device according to claim 1, **characterised in that** the at least one trigger element (24a, 24b) is connected to at least one connection element (20a, 20b) via which the fibre composite component (30) can be integrated in a load-bearing structure of a fibre fabric.

3. Device according to claim 2, **characterised in that** the at least one connection element (20a, 20b) is connected to the braided fibre composite (32) of the fibre composite component (30).

4. Device according to any one of claims 1 to 3, **characterised in that** the at least one trigger element (24a, 24b) is integrated in the fibre composite (32) in such a manner that the fibre composite (32) is divided into an outer region (34a, 34b) and an inner region (36a, 36b).

5. Device according to any one of claims 1 to 4, **characterised in that** the at least one trigger element (24a, 24b) is constructed as a closed form which has a wedge-like crosssection.

6. Device according to any one of claims 2 to 5, **characterised in that** the connection element (20a, 20b) is constructed as a securing plate on which the at least one trigger element (24a, 24b) is formed in such a manner that the at least one trigger element (24a, 24b) divides the connection element (20a, 20b) which is constructed as a securing plate into two regions (22a, 22b, 26a, 26b).

7. Device according to claim 6, **characterised in that** the at least one trigger element (24a, 24b) is integrated in the fibre composite (32) in such a manner that the inner region (36a, 36b) of the fibre composite (32) is supported on an overhang (26a, 26b) inside the at least one trigger element (24a, 24b), and the outer region (34a, 34b) is supported outside the at least one trigger element (24a, 24b) on a remnant plate (22a, 22b).

8. Device according to any one of claims 1 to 7, **characterised in that** the fibre composite component (30) has a closed basic shape, which is closed at both ends in each case by a connection element (20a, 20b) having an integrated trigger element (24a, 24b).

9. Carrier structure for a vehicle, **characterised by** at least one device for energy absorption in the event of a crash load according to any one of claims 1 to 8.

10. Carrier structure according to claim 9, **characterised in that** the device for energy absorption in the event of a crash load is connected as a carrying structural component using connection techniques, preferably riveting and/or screwing, to other structural components of the carrier structure of the vehicle.

## Revendications

1. Dispositif pour l'absorption d'énergie dans une chute de charge lors d'un crash avec au moins un élément déclencheur (24a, 24b) et un composant renforcé par des fibres (30), dans lequel l'au moins un élément déclencheur (24a, 24b) influence de manière définie un comportement de défaillance du composant renforcé par des fibres (30) dans la chute de charge lors d'un crash, et dans lequel un contact direct entre l'au moins un élément déclencheur (24a, 24b) et le composite de fibre (32) existe, **caractérisé en ce que** le composant renforcé par des fibres (30) présente un composite de fibre (32) tressé, dans lequel l'au moins un élément déclencheur (24a, 24b) est tressé.

2. Dispositif selon la revendication 1, **caractérisé en ce que** l'au moins un élément déclencheur (24a, 24b) est raccordé à au moins un élément de raccordement (20a, 20b) par le biais duquel le composant renforcé par des fibres (30) peut être intégré dans une structure porteuse d'un tissu fibreux.

3. Dispositif selon la revendication 2, **caractérisé en ce que** l'au moins un élément de raccordement (20a, 20b) est raccordé au composite de fibre (32) tressé du composant renforcé par des fibres (30).

4. Dispositif selon l'une quelconque des revendications 1 à 3, **caractérisé en ce que** l'au moins un élément déclencheur (24a, 24b) est intégré dans le composite de fibre (32) de sorte que le composite de fibre (32) soit divisé en une zone extérieure (34a, 34b) et une zone intérieure (36a, 36b).

5. Dispositif selon l'une quelconque des revendications 1 à 4, **caractérisé en ce que** l'au moins un élément déclencheur (24a, 24b) est réalisé en tant que forme fermée qui présente une section transversale cunéiforme.

6. Dispositif selon l'une quelconque des revendications 2 à 5, **caractérisé en ce que** l'élément de raccordement (20a, 20b) est réalisé en tant que plaque de fixation sur laquelle l'au moins un élément déclencheur (24a, 24b) est formé de sorte que l'au moins un élément déclencheur (24a, 24b) divise l'élément de raccordement (20a, 20b) réalisé en tant que plaque de fixation en deux zones (22a, 22b, 26a, 26b).

7. Dispositif selon la revendication 6, **caractérisé en ce que** l'au moins un élément déclencheur (24a, 24b) est intégré dans le composite de fibre (32) de sorte que la zone intérieure (36a, 36b) du composite de fibre (32) s'appuie sur un porte-à-faux (26a, 26b) dans l'au moins un élément déclencheur (24a, 24b), et la zone extérieure (34a, 34b) s'appuie en dehors d'au moins un élément déclencheur (24a, 24b) sur une plaque restante (22a, 22b).

8. Dispositif selon l'une quelconque des revendications 1 à 7, **caractérisé en ce que** le composant renforcé par des fibres (30) présente une forme de base fermée qui est terminée aux deux extrémités respectivement par un élément de raccordement (20a, 20b) avec un élément déclencheur intégré (24a, 24b).

9. Structure porteuse pour un véhicule, **caractérisée par** au moins un dispositif pour l'absorption d'énergie dans une chute de charge lors d'un crash selon l'une quelconque des revendications 1 à 8.

10. Structure porteuse selon la revendication 9, **caractérisée en ce que** le dispositif pour l'absorption d'énergie est raccordé dans une chute de charge lors d'un crash en tant que composant structurel porteur par des technologies de raccordement, de préférence par rivetage et/ou vissage, à d'autres composants structurels de la structure porteuse du véhicule.
